(19) Europäisches Patentamt
European Patent Office
Office européen des brevets

(11) Veröffentlichungsnummer : **0 128 340**
**B1**

(12) **EUROPÄISCHE PATENTSCHRIFT**

(45) Veröffentlichungstag der Patentschrift : **27.05.87**

(51) Int. Cl.[4] : **C 09 B 62/25**, C 09 B 62/513, D 06 P 3/66

(21) Anmeldenummer : **84105082.6**

(22) Anmeldetag : **05.05.84**

(54) **Disazoreaktivfarbstoffe.**

(30) Priorität : **18.05.83 DE 3318146**

(43) Veröffentlichungstag der Anmeldung : **19.12.84 Patentblatt 84/51**

(45) Bekanntmachung des Hinweises auf die Patenterteilung : **27.05.87 Patentblatt 87/22**

(84) Benannte Vertragsstaaten : **CH DE FR GB LI**

(56) Entgegenhaltungen :
**EP-A- 0 084 314**
**DE-A- 3 113 473**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**

**EP 0 128 340 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind Disazoreaktivfarbstoffe der Formeln

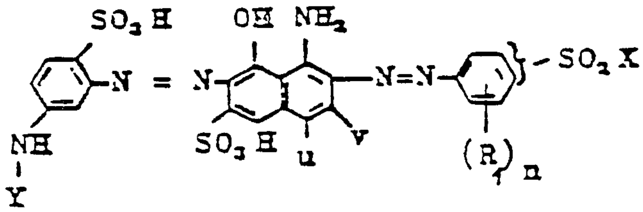

(1)

und

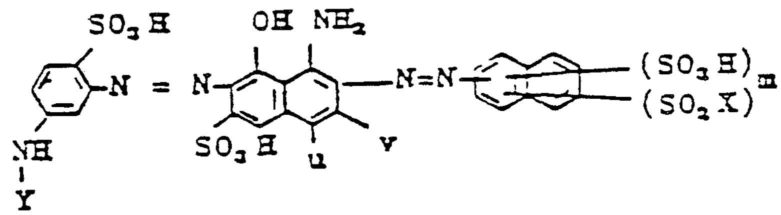

(2)

worin

u und v = H oder $SO_3H$, wobei u ≠ v

$R_1$ = Substituent

X = $-CH{=}CH_2$, $-CH_2-CH_2-OSO_3H$, $-CH_2-CH_2Cl$, $-CH_2-CH_2S_2O_3H$, $-CH_2CH_2OCOCH_3$, $-CH_2CH_2OPO_3H_2$

Y = Rest einer Reaktivkomponente der Pyrimidinreihe, der mindestens einen reaktiven Fluorsubstituenten enthält,

n = 1 oder 2

m = 0, 1 oder 2

wobei die Substituenten $R_1$ gleich oder verschieden sein können und n für 2 steht, falls $R_1$ in o-Stellung zur Azobrücke stehendes $OCH_3$ bedeutet, insbesondere solche, in denen der Rest

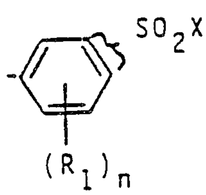

für eine der folgenden Bedeutungen steht :

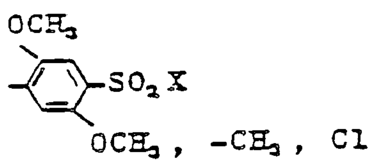

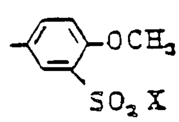

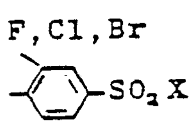

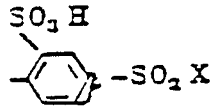

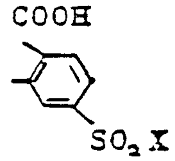

sowie deren Verwendung zum Färben cellulosehaltiger Materialien.

Geeignete Pyrimidinreste Y, die mindestens einen unter Färbebedingungen abspaltbaren Fluorsubstituenten enthalten, sind beispielsweise folgende :

2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methyl-sulfonyl-4-pyrimidinyl-, 2-Fluor-4-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-cyan-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-methyl-pyrimidinyl-4, 5,6-Difluorpyrimidinyl-4, 6-Fluor-5-chlor-2-trifluormethyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-5-methylsulfonyl-pyrimidinyl-4, 6-Fluor-5-phenylsulfonyl-pyrimidinyl-4.

Als Substituenten $R_1$ sind bevorzugt :

$C_1$-$C_4$-Alkyl, insbesondere $CH_3$, $C_2H_5$, $C_1$-$C_4$-Alkoxy, insbesondere $CH_3O$, $C_2H_5O$, Halogen, insbesondere F, Cl und Br, COOH, $SO_3H$ und OH.

Bevorzugt sind Reaktivfarbstoffe der Formeln (1) und (2), in denen Y für folgende Reste steht :

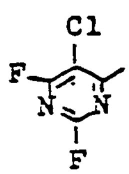 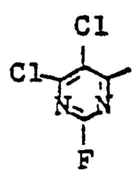 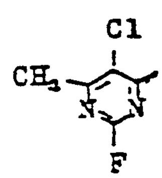 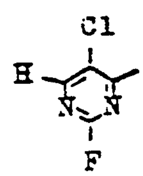

Weiterhin bevorzugt sind Reaktivfarbstoffe der Formeln (1) und (2), in denen der Rest

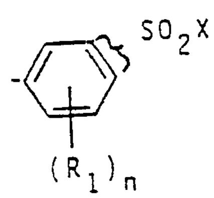

für folgende Bedeutungen steht :

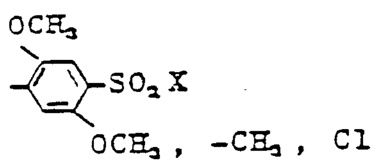

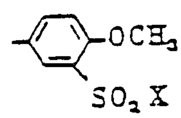

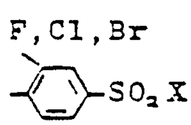

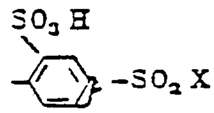

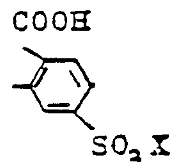

Zur Herstellung der Verbindungen nach Anspruch 1 wird eine Disazoverbindung der Formel

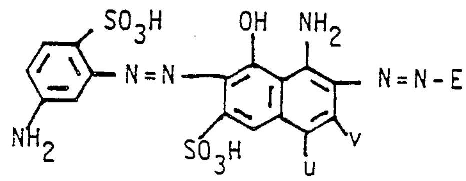

(3)

wobei

E = 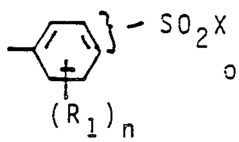 oder 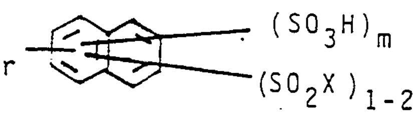

mit einer durch mindestens zwei Fluoratome substituierten Pyrimidinverbindung der Formel

F—Y (4)

unter Abspaltung von Fluorwasserstoffsäure kondensiert, oder es wird 1,3-Diaminobenzol-6-sulfonsäure mit einer durch mindestens zwei Fluoratome substituierten Pyrimidinverbindung der Formel (4) zu einem Amin der Formel

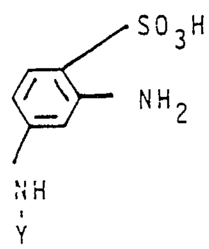

(5)

kondensiert, das diazotiert und im neutralen bis alkalischen Medium mit einer Kupplungskomponente der Formel

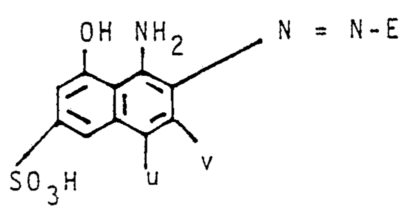

(6)

zu einem Farbstoff der Formeln (1) bzw. (2) gekuppelt wird, wobei die Substituenten die in Anspruch 1 angegebenen Bedeutungen aufweisen.

Die Herstellung der erfindungsgemäßen Farbstoffe und Farbstoffzwischenprodukte erfolgt vorzugsweise in wäßrigem Medium.

Die Umsetzung mit fluorhaltigen Pyrimidinen erfolgt bei schwach saurem bis schwach alkalischem pH-Wert. Die bei der Kondensation freiwerdende Fluorwasserstoffsäure wird vorzugsweise durch Zugabe von verdünnter Alkalihydroxid- bzw. -carbonat- oder -bicarbonat-Lösung neutralisiert.

Als Ausgangsverbindung zur Herstellung der Reaktivfarbstoffe der Formel (I) können beispielsweise genannt werden :

a) Kupplungskomponenten der Formel (4)

1-Amino-8-hydroxynaphthalin-3,6-disulfonsäure (H-Säure),
1-Amino-8-hydroxynaphthalin-4,6-disulfonsäure (K-Säure),

b) Diazokomponenten der Formel (3)

4-Methoxyanilin-3-β-sulfatoethylsulfon, 4-Methoxy-anilin-3-vinylsulfon, 2,5-Dimethoxy-anilin-4-β-sulfatoethylsulfon, 2,5-Dimethoxy-anilin-4-vinylsulfon, 2,5-Dimethoxyanilin-4-β-sulfatoethylsulfon, 2-Methoxy-5-methylanilin-4-β-sulfatoethysulfon, 2-Methoxy-5-methyl-anilin-4-vinylsulfon, 6-Carboxy-anilin-3-β-sulfatoethylsulfon, 6-Carboxy-anilin-3-vinylsulfon, 2-Sulfoanilin-4-β-sulfatoethylsulfon, 2-Sulfoanilin-4-vinylsulfon, 2,4-Disulfo-anilin-5-vinylsulfon, 2-Hydroxy-anilin-5-β-sulfatoethylsulfon, 2-Hydroxy-anilin-4-β-sulfatoethylsulfon, 3-Sulfo-2-hydroxy-anilin-5-β-sulfatoethylsulfon, 2-Naphthylamin-8-β-sulfatoethylsulfon, 2-Naphthylamin-6-β-sulfatoethylsulfon, 1-Sulfo-2-naphtylamin-6-β-sulfatoethylsulfon, 6-Sulfo-2-naphthylamin-8-β-sulfatoethylsulfon, 2-Aminonaphthalin-6,8-di-(β-sulfatoethylsulfon), 2-Brom-1-aminobenzol-4-β-sulfatoethylsulfon, 2,6-Dichlor-1-aminobenzol-4-β-sulfatoethylsulfon.

c) Diazokomponenten der Formel (6)

1,3-Diaminobenzol-4-sulfonsäure.

d) Fluorheterocyclen der Formel (8)

2,4-Difluor-6-methylpyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4-Difluor-5-nitro-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxypyrimidin, 2,4-Difluor-6-phenyl-pyrimidin, 2,4-Difluor-6-cyanpyrimidin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluormethyl-2,4-difluorpyrimidin, 4,6-Difluor-5-chlorpyrimidin, 4,6-Difluor-5-trifluormethyl-pyrimidin, 4,6-Difluor-2-methyl-pyrimidin, 4,6-Difluor-5-chlor-2-methyl-pyrimidin, 4,5,6-Trifluor-pyrimidin, 4,6-Difluor-5-chlor-2-trifluormethyl-pyrimidin, 4,6-Difluor-2-phenyl-pyrimidin, 4,6-Difluor-5-cyan-pyrimidin, 4,6-Difluor-5-nitro-pyrimidin, 4,6-Difluor-5-methylsulfonyl-pyrimidin, 4,6-Difluor-5-phenyl-sulfonyl-pyrimidin.

Die Reaktivfarbstoffe der Formeln (1) und (2) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet werden ; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die Reaktivfarbstoffe der Formeln (1) und (2) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht erfernen lassen. Die

Färbungen sind ätzbar.

Die Reaktivfarbstoffe der Formeln (1) und (2) eignen sich zum Färben und Bedrucken der verschiedensten Substrate, wie Siede, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern z. B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen. Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder Ammoniumsalze.

In der älteren EP-A-084 314 werden konstitutionell ähnliche Disazofarbstoffe beschrieben, die sich von den erfindungsgemäßen Farbstoffen durch die Abwesenheit des bzw. der Substituenten $R_1$ unterscheiden.

In der DE-A-31 13 473 werden konstitutionell ähnliche Disazofarbstoffe beschrieben, welche die $-SO_2X$-Gruppe in o-Stellung zur Azobrücke enthalten. Gegenüber diesen Farbstoffen zeigen die erfindungsgemäßen Farbstoffe den überraschenden Vorteil der besseren Hypochloritbleichechtheit der Cellulosefärbungen.

Beispiel 1

64,5 g des Farbstoffs der Formel

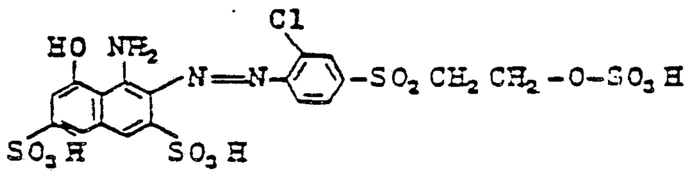

werden bei pH 6-7 mit der Diazoniumverbindung aus 33,7 g des Kondensationsproduktes von 18,8 g 1,3-Diaminobenzol-6-sulfonsäure mit 17 g 2,4,6-Trifluor-5-chlor-pyrimidin zu einem dunkelblauen Farbstoff gekuppelt. Nach Aussalzen, Isolieren, Trocknen und Mahlen fällt der Farbstoff der Formel

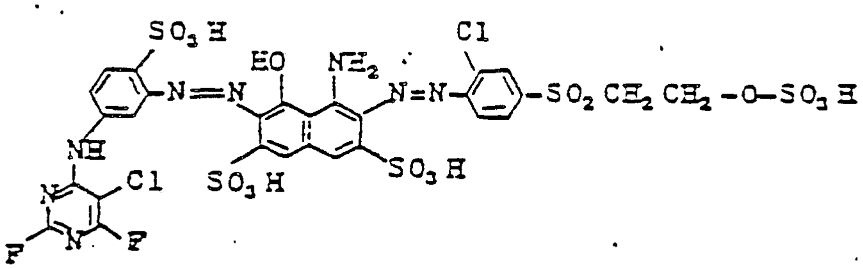

als dunkles Pulver an, der sich in Wasser mit blauer Farbe löst und Baumwolle in marineblauen (28) bis schwarzen Tönen färbt.

Wenn man nach der geschilderten Arbeitsweise verfährt und als Ausgangsprodukt für die Diazoniumverbindung die Kondensationsprodukte verwendet, die aus den in Spalte 2 genannten Diaminobenzolsulfonsäuren und den in Spalte 3 aufgeführten Fluorpyrimidinen erhältlich sind, und als Monoazofarbstoffe, die bei pH 6-7 ankuppelbar sind, die in Spalte 4 beschriebenen Verbindungen einsetzt, so erhält man gleichfalls Reaktivfarbstoffe, die Baumwolle in den in Spalte 5 genannten Tönen färben (in Klammer : Colour Index hue-number).

(Siehe Tabelle Seite 7 ff.)

Tabelle

| Beispiel | Diaminobenzolsulfonsäure | Fluor-pyrimidin | Monoazofarbstoff | Farbton mit Colour-Index hue-number |
|---|---|---|---|---|
| 2 | 1,3-Diaminobenzol-6-sulfonsäure | A | 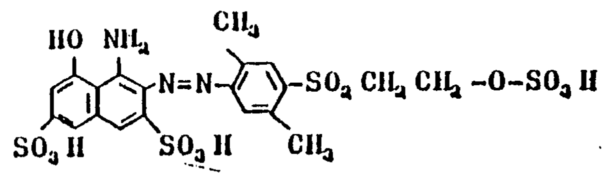 | grünst. marine 1 (39) |
| 3 | " | B | " | " |
| 4 | " | C | " | " |
| 5 | " | A | 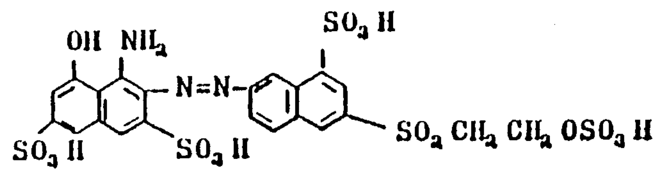 | " " |
| 6 | " | B | " | " |
| 7 | " | C | " | " |

Tabelle (Fortsetzung)

| Beispiel | Diaminobenzolsulfonsäure | Fluorpyrimidin | Monoazofarbstoff | Farbton mit Colour-Index hue-number |
|---|---|---|---|---|
| 8 | 1,3-Diaminobenzol-6-sulfonsäure | A | 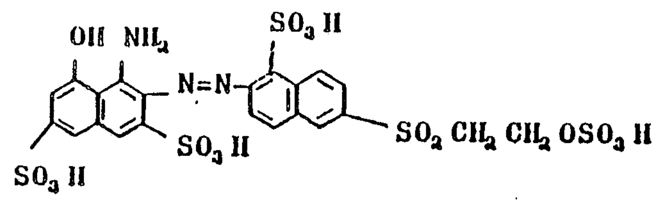 | grünst. marine (39) |
| 9 | " | B | " | " |
| 10 | " | D | " | " |
| 11 | " | A | 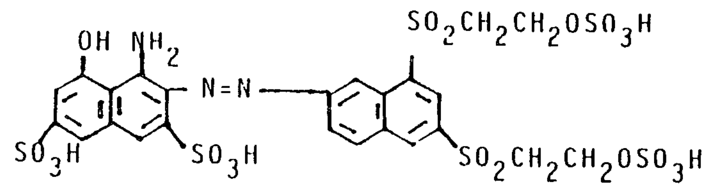 | " |
| 12 | " | B | " | " |
| 13 | " | C | " | " |

A = 2,4,6-Trifluor-5-chlor-pyrimidin
B = 2,4-Difluor-5,6-dichlor-pyrimidin
C = 2,4-Difluor-5-chlor-6-methyl-pyrimidin
D = 2,4-Difluor-5-chlor-pyrimidin

Beispiel 14

68 g des Farbstoffs der Formel

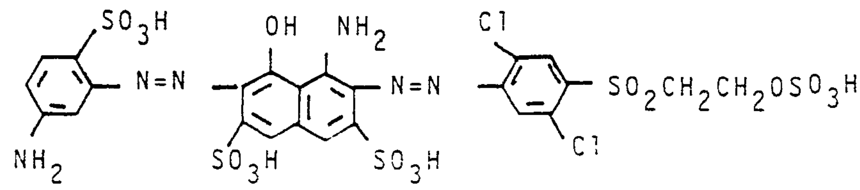

werden in 1 000 ml Wasser angerührt. Man kühlt auf 12-15° ab und tropft in 1/2 Stunde 17 g 2,4,6-Trifluor-5-chlorpyrimidin ein und hält durch gleichzeitige Zugabe von 10 %iger Natronlauge den pH zwischen 6 und 7. Nach beendeter Kondensation wird der Farbstoff ausgesalzen. Man erhält ein dunkles Pulver, das sich leicht in Wasser mit blauer Farbe löst und Baumwolle in dunkelblauen (Colour Index hue-number : 40) bis schwarzen Tönen färbt.

Einen Farbstoff mit ähnlichen Eigenschaften erhält man bei Verwendung des Ausgangsfarbstoffs der Formel

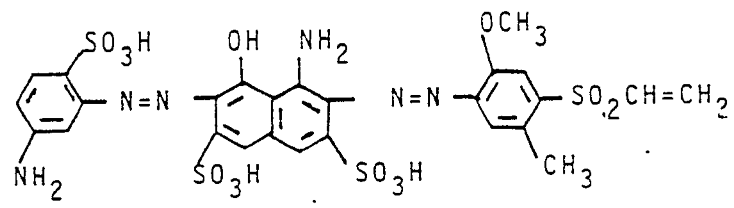

**Patentansprüche**

1. Disazoreaktivfarbstoffe der Formeln

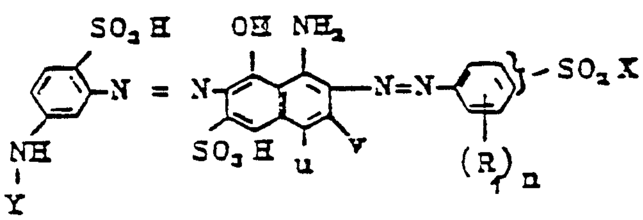

(1)

und

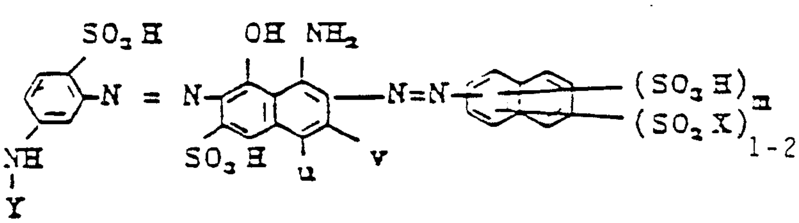

(2)

worin

u und v = H oder $SO_3H$, wobei u ≠ v

$R_1$ = Substituent

X = $-CH=CH_2$, $-CH_2-CH_2-OSO_3H$, $-CH_2-CH_2Cl$, $-CH_2-CH_2S_2O_3H$, $-CH_2CH_2OCOCH_3$, $-CH_2CH_2OPO_3H_2$

Y = Rest einer Reaktivkomponente der Pyrimidinreihe, der mindestens einen reaktiven Fluorsubstituenten enthält,

n = 1 oder 2

m = 0, 1 oder 2

wobei die Substituenten $R_1$ gleich oder verschieden sein können und n für 2 steht, falls $R_1$ in o-Stellung zur Azobrücke stehendes $OCH_3$ bedeutet.

2. Farbstoffe des Anspruchs 1, in denen der Rest

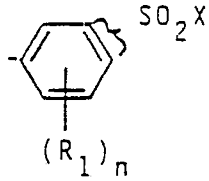

für eine der folgenden Bedeutungen steht :

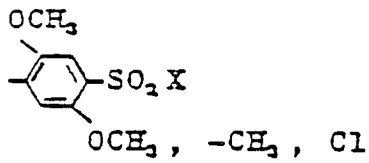

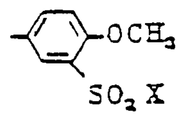

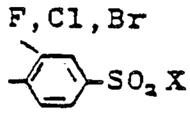

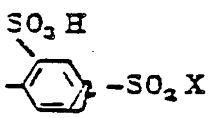

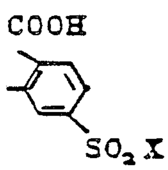

wobei X die in Anspruch 1 angegebene Bedeutung hat.

3. Verwendung der Farbstoffe der Ansprüche 1 und 2 zum Färben cellulosehaltiger Materialien.

**Claims**

1. Disazo reactive dyestuffs of the formulae

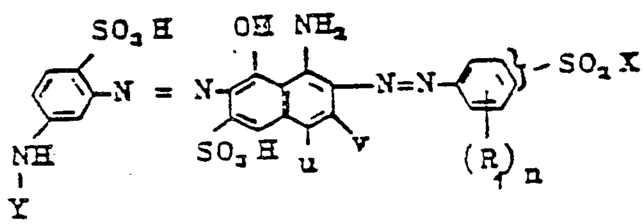
(1)

und

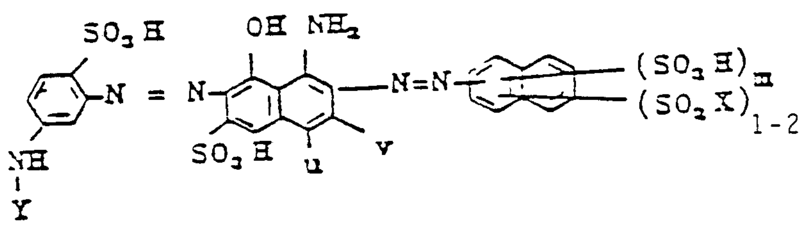
(2)

wherein
u and v = H or $SO_3$ H and u $\neq$ v,
$R_1$ = a substituent,
X = $-CH{=}CH_2$, $-CH_2-CH_2-OSO_3H$, $-CH_2-CH_2Cl$, $-CH_2-CH_2S_2O_3H$, $-CH_2CH_2OCOCH_3$ or $-CH_2CH_2OPO_3H_2$,
Y = the radical of a reactive component of the pyrimidine series which contains at least one reactive fluorine substituent,
n = 1 or 2, and
m = 0, 1 or 2,
wherein the substituents $R_1$ can be identical or different and n represents 2 if $R_1$ denotes $OCH_3$ in the o-position to the azo bridge.

2. Dyestuffs of Claim 1, in which the radical

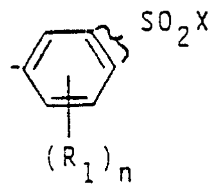

represents one of the following meanings :

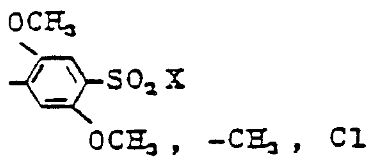

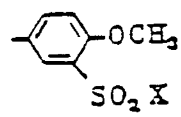

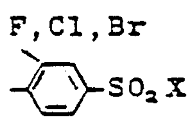

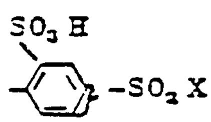

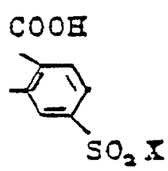

wherein X has the meaning given in Claim 1.

3. Use of the dyestuffs of Claims 1 and 2 for dyeing cellulose-containing materials.

**Revendications**

1. Colorants réactifs disazoïques de formules

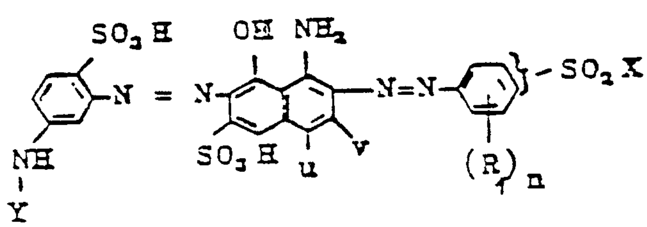 (1)

und

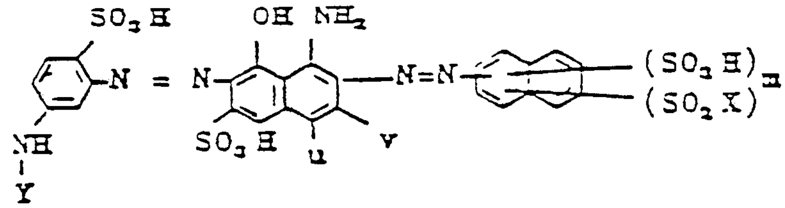 (2)

dans lesquelles

u et v = H ou $SO_3H$, avec u ≠ v

$R_1$ = substituant

X = $—CH{=}CH_2$, $—CH_2—CH_2—OSO_3H$, $—CH_2—CH_2Cl$, $—CH_2—CH_2S_2O_3H$, $—CH_2CH_2OCOCH_3$, $—CH_2CH_2OPO_3H_2$

Y = reste d'un composant réactif de la série de la pyrimidine qui contient au moins un substituant fluoré réactif,

n = 1 ou 2

m = 0, 1 ou 2

les substituants $R_1$ pouvant être égaux ou différents et n ayant la valeur 2, au cas où $R_1$ représente un groupe $OCH_3$ en position ortho par rapport au pont azo.

2. Colorants suivant la revendication 1, dans lesquels le reste

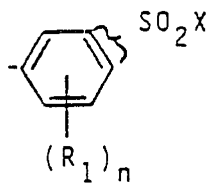

a l'une des définitions suivantes :

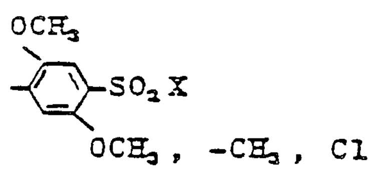

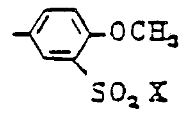

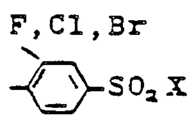

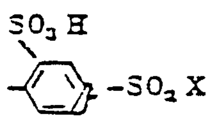

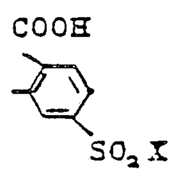

X ayant la définition indiquée dans la revendication 1.

3. Utilisation des colorants suivant les revendications 1 et 2 pour la teinture de matières cellulosiques.